# EUROPEAN PATENT APPLICATION

(11) **EP 4 607 045 A1**
(43) Date of publication of application: **27.08.2025**
(21) Application number: 23894819.4
(22) Date of filing: 18.10.2023
(51) Int. Cl.: F16C 13/06, F17C 1/06

(54) **CLOSURE DEVICE HAVING IMPROVED HYDROGEN EMBRITTLEMENT RESISTANCE FOR HYDROGEN STORAGE CONTAINER, AND HYDROGEN STORAGE CONTAINER COMPRISING SAME**

(30) Priority: 25.11.2022 KR 20220160934
(71) Applicant: Energyn Inc., Hwaseong-si, Gyeonggi-do 18543 (KR)
(72) Inventor: HWANG, Ihn Kee, Hwaseong-si Gyeonggi-do 18543 (KR); LEE, Young Chul, Yongin-si Gyeonggi-do 16809 (KR)
(74) Representative: AWA Sweden AB
(86) International application number: PCT/KR2023/016128
(87) International publication number: WO 2024/111890

(57) **Abstract**

The present invention relates to a closure device for a hydrogen storage container, which can safely discharge permeated hydrogen to the outside of the container while satisfying hydrogen embrittlement resistance and mechanical strength standards. The closure device having improved hydrogen embrittlement resistance includes a cap member for sealing an open part of the storage cylinder and withstanding the pressure of the storage cylinder, a brittleness blocking member installed on the cap member to contact the hydrogen in the storage cylinder and to block permeation of hydrogen into the cap member caused by the internal pressure of the storage cylinder, and a permeated hydrogen-discharging hole formed through the cap member to communicate with the outside so that an external pressure lower than the internal pressure of the storage cylinder acts between the brittleness blocking member and the cap member to discharge the hydrogen having penetrated through the brittleness blocking member.

## Description

### [Technical Field]

The present invention relates to a closure device configured to hermetically seal a hydrogen storage container, and more particularly to a closure device for a hydrogen storage container, which is capable of safely discharging hydrogen having penetrated through a brittleness blocking member, to the outside while satisfying hydrogen embrittlement resistance and a desired mechanical strength.

### [Background Art]

Typically, a hydrogen container is used to store hydrogen therein. Here, the hydrogen is stored in the hydrogen container in a pressurized state in order to store a large amount of hydrogen.

The hydrogen container has to have high durability because the hydrogen container generates hydrogen embrittlement due to the inherent property of the hydrogen and the hydrogen is stored under high pressure. An example of the hydrogen container has been disclosed in Korean patent publication No. 102330581 (published on December 1, 2021) entitled "high pressure gas container".

The conventional high pressure gas container includes a container body, a container reinforcing wire wound around the radial periphery of the container body to reinforce the container body, a container cap coupled to an open end of the container body to hermetically seal the container body and made of a material having corrosion resistance to charged gas, a yoke which is made of a material cheaper than the container cap and having no corrosion resistance and which is seated on the container cap and has a curved surface which is convex in an outward direction of the container cap, and a cap reinforcing wire wound around the length of the container body including the yoke to prevent the container cap from being separated due to the pressure of the gas charged in the container body.

In the conventional high pressure gas container, because the container reinforcing wire is wound around the container body and the cap wire is wound around the yoke, it is possible to improve durability. Furthermore, because the container cap is made of a material having hydrogen embrittlement resistance, it is possible to prevent hydrogen embrittlement.

In contrast, in the conventional high pressure gas container, there were problems of high manufacturing cost due to the container cap being made entirely of a material having hydrogen embrittlement resistance and of hydrogen embrittlement due to hydrogen remaining on the container cap without penetrating through the container cap due to the increased thickness of the container cap.

### [Disclosure]

### [Technical Problem]

Therefore, the present invention has been made in view of the above problems, and it is an object of the present invention to provide a closure device having improved hydrogen embrittlement resistance for a hydrogen storage container and a hydrogen storage container including the same in which an embrittlement blocking member is installed on a cap member and external pressure is provided between the cap member and the embrittlement blocking member through a penetrated hydrogen discharge hole, thereby preventing generation of hydrogen embrittlement in the embrittlement blocking member, and in which, when hydrogen penetrates through the embrittlement blocking member, the hydrogen is discharged to the penetrated hydrogen discharge hole through between the cap member and the embrittlement blocking member, thereby preventing generation of hydrogen embrittlement in the cap member.

Furthermore, it is another object of the present invention to provide a closure device having improved hydrogen embrittlement resistance for a hydrogen storage container and a hydrogen storage container including the same in which the embrittlement blocking member configured to prevent generation of hydrogen embrittlement is installed on the cap member and the cap member is made of one selected from various materials, thereby reducing the manufacturing cost and improving durability of the cap member.

### [Technical Solution]

In order to solve the above-mentioned problems, an embodiment of the present invention provides a closure device having improved hydrogen embrittlement resistance for a hydrogen storage container, the closure device being configured to hermetically seal a storage cylinder storing hydrogen therein, and the closure device including a cap member configured to hermetically seal an open end of the storage cylinder and to endure pressure of the hydrogen charged in the storage cylinder, an embrittlement blocking member installed on the cap member so as to be in direct contact with the hydrogen charged in the storage cylinder and to block permeation of the hydrogen into the cap member caused by an internal pressure of the storage cylinder, and a penetrated hydrogen discharge hole which is formed through the cap member to communicate with an outside and to allow an external pressure lower than an internal pressure of the storage cylinder to be exerted between the embrittlement member and the cap member and through which the hydrogen having penetrated through the embrittlement blocking member is discharged.

An external pressure action groove may be formed between the cap member and the embrittlement blocking member such that the external pressure is exerted on the external pressure action groove through the penetrated hydrogen discharge hole.

The external pressure action groove may be formed in the cap member or the embrittlement blocking member in an irregular concave-convex form.

The embrittlement blocking member may be made of a material having hydrogen embrittlement resistance or may be coated with a material having hydrogen embrittlement resistance, and the cap member may be made of a material having no hydrogen embrittlement resistance.

The embrittlement blocking member may have a thickness equal to or less than 1/3 of a thickness of the cap member.

The embrittlement blocking member may include a blocking member seat installed on a periphery of the embrittlement blocking member to prevent discharge of hydrogen through the gap between the storage cylinder and the embrittlement blocking member.

The cap member may include a cap member seal hermetically disposed between the cap member and the storage cylinder to prevent discharge of the hydrogen.

The closure device may include a charge nozzle installed through the cap member and the embrittlement blocking member to charge hydrogen into the storage cylinder.

Another embodiment of the present invention provides a hydrogen storage container including the closure device according to the above embodiment having improved hydrogen embrittlement resistance for a hydrogen storage container, the hydrogen storage container including the closure device, and a cylinder wire wound around an outer surface of the storage cylinder to reinforce the storage cylinder.

The storage cylinder may be open at two opposite sides, and the closure device may be installed on each of the two open sides of the storage cylinder.

The hydrogen storage container may include yokes respectively installed on outer sides of the cap members positioned at two opposite sides of the storage cylinder to prevent separation of the cap members from the storage cylinder, and a yoke wire wound around the yokes positioned at the two opposite sides of the storage cylinder with the storage cylinder interposed therebetween to endure pressure in an axial direction of the storage cylinder.

### [Advantageous effects]

According to the present invention, the embrittlement blocking member is installed on the cap member and external pressure is provided between the cap member, and the embrittlement blocking member through the penetrated hydrogen discharge hole, thereby causing the hydrogen having permeated into the embrittlement blocking member to penetrate through the embrittlement member. Furthermore, because the hydrogen having penetrated through the embrittlement blocking member is discharged to the outside through the penetrated hydrogen discharge hole, it is possible to prevent generation of hydrogen embrittlement in the cap member.

In addition, the embrittlement blocking member is installed on the cap member to block generation of hydrogen embrittlement and the cap member is made of one selected from various materials, thereby reducing the manufacturing cost and improving durability of the cap member.

### [Description of Drawings]

FIG. 1 is a perspective view of a hydrogen storage container including a closure device having improved hydrogen embrittlement resistance according to an embodiment of the present invention;
FIG. 2 is a side cross-sectional view of the hydrogen storage container including the closure device having improved hydrogen embrittlement resistance according to the embodiment of the present invention;
FIG. 3 is a perspective view of the closure device having improved hydrogen embrittlement resistance for the hydrogen storage container according to the embodiment of the present invention in which a cap member and an embrittlement blocking member are separated from each other;
FIG. 4 is a side cross-sectional view of the closure device having improved hydrogen embrittlement resistance for the hydrogen storage container according to the embodiment of the present invention;
FIG. 5 is an enlarged view of portion "A" in FIG. 4, which illustrates discharge of penetrated hydrogen; and
FIG. 6 is a side cross-sectional view of the closure device having improved hydrogen embrittlement resistance for the hydrogen storage container according to the embodiment of the present invention, which includes a cap member according to a modification.

### [Best Mode]

Hereinafter, an embodiment of the present invention will be described with reference to the accompanying drawing.

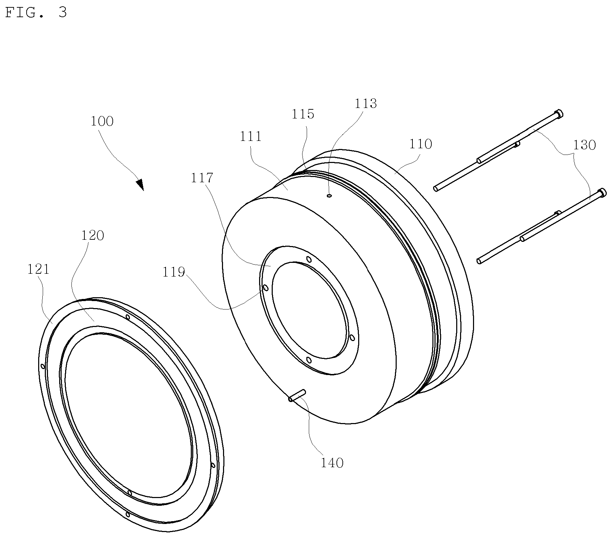

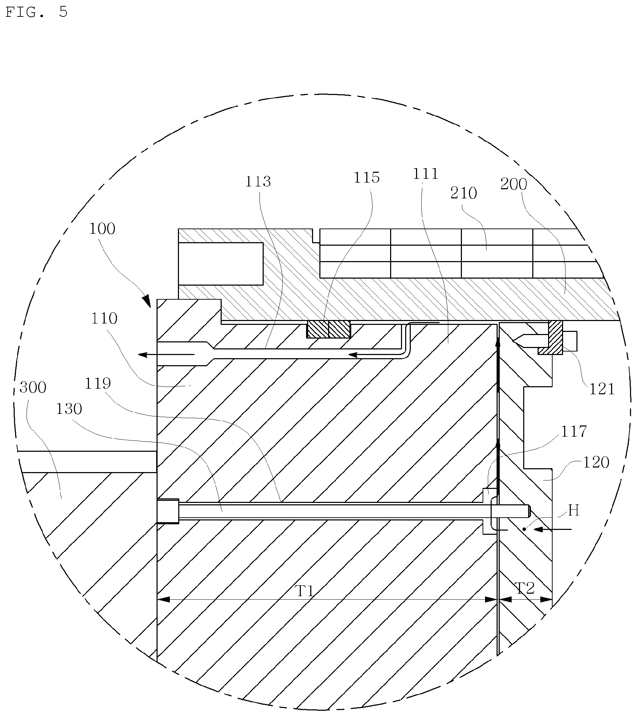

As illustrated in FIGs. 3 to 5, a closure device 100 having improved hydrogen embrittlement resistance for a hydrogen storage container 500 according to an embodiment of the present invention may include a cap member 110 and an embrittlement blocking member 120.

The cap member 110 may cover the open portion of a storage cylinder 200, configured to store hydrogen therein, to hermetically seal the storage cylinder 200. The cap member 110 may endure hydrogen pressure which is exerted in the axis direction of the storage cylinder 200.

Here, the storage cylinder 200 may have the form of a cylinder which is open at one or both of two opposite ends thereof. In the drawing, the storage cylinder 200 is open at the two opposite ends thereof, and the closure device 100 is installed on each of the two open ends.

The cap member 110 may cover and hermetically seal the open portion of the storage cylinder 200, and the cap member 110 may be provided at one side thereof with an insertion portion 111 which has an outside diameter corresponding to the inside diameter of the storage cylinder 200 and is inserted into the end of the storage cylinder 200.

The insertion portion 111 of the cap member 110, which is inserted into the storage cylinder 200, may be provided therearound with a cap member seal 115 configured to prevent the hydrogen stored in the storage cylinder 200 from leaking outwards.

The cap member seal 115 may have the form of a ring, and may be installed on the insertion portion 111 in such a manner that the cap member seal 115 is inserted into a seal groove formed in the outer periphery of the insertion portion 111. The cap member seal 115 may be made of metal capable of enduring high pressure, and may be made of a material having hydrogen embrittlement resistance in order to prevent hydrogen embrittlement.

Here, the material having hydrogen embrittlement resistance may be, for example, aluminum, titanium, carbon, stainless steel, austenite or martensite-based metal or an alloy including one or more thereof.

The cap member seal 115 may be embodied as various known high-pressure seals capable of enduring the high pressure of the hydrogen charged in the storage cylinder 200.

The cap member 110 may have formed therethrough a penetrated hydrogen discharge hole 113 which communicates with the outside such that external pressure (atmospheric pressure) is exerted between the cap member 110 and the hydrogen having penetrated through the embrittlement blocking member 120 is discharged to the outside.

The penetrated hydrogen discharge hole 113 may be formed through the periphery of the insertion portion 111 so as to allow the hydrogen to be discharged to the outside of the cap member 110.

The penetrated hydrogen discharge hole 113 may be provided with a pressure hole valve configured to control an opening degree of the penetrated hydrogen discharge hole 113. Because an amount of the hydrogen discharged through the penetrated hydrogen discharge hole 113 is very small, the hydrogen may be discarded to the outside, may be filtered by a catalyst carrier filter installed to the penetrated hydrogen discharge hole 113 so as to block discharge of the hydrogen, or may be stored in an additional storage container connected to the penetrated hydrogen discharge hole.

The position at which the penetrated hydrogen discharge hole 113 is formed through the insertion portion 111 may be closer to the inside of the storage cylinder 200 than the installation position of the cap member seal 115 such that the hydrogen having penetrated through the embrittlement blocking member 120 is discharged to the outside of the cap member 110 through the penetrated hydrogen discharge hole 113 before being blocked by the cap member seal 115.

Because the cap member 110 is protected from hydrogen embrittlement by means of the embrittlement blocking member 120 to be described later, the cap member 110 may be made of a material having no hydrogen embrittlement resistance.

Accordingly, because the cap member 110 is made of a material having no hydrogen embrittlement resistance, it is possible to remarkably reduce the manufacturing cost.

The surface of the cap member 110 to which the embrittlement blocking member 120 is coupled may have formed therein an external pressure action groove 117 such that external pressure acts between the cap member 110 and the embrittlement member 120 for discharge of hydrogen.

Because the external pressure action groove 117 is positioned at the boundary surface between the cap member 110 and the embrittlement blocking member 120, the external atmospheric pressure may be exerted on the external pressure action groove 117 through the penetrated hydrogen discharge hole 113 and the gap between the cap member 110 and the embrittlement blocking member 120.

The inner surface of the external pressure action groove 117 may be coated with a material having hydrogen embrittlement resistance in order to prevent the hydrogen introduced into the external pressure action groove 117 from permeating the cap member 110. Alternatively, an embrittlement blocking cover (not shown), which has a shape corresponding to the external pressure action groove 117 so as to be fitted into the external pressure action groove 117 and which is made of a material having hydrogen embrittlement resistance, may be installed in the external pressure action groove 117.

Furthermore, the cap member 110 may have formed therethrough a fastening hole 119 through which a fastening member 130, such as a bolt, extends to couple the embrittlement blocking member 120 to the cap member 110. The fastening hole 119 may be connected to the external pressure action groove 117 such that external atmospheric pressure is exerted on the external pressure action groove 117 through the fastening hole 119.

The external pressure action groove 117 may be formed in one or both of the surface of the cap member 110 that faces the embrittlement blocking member 120 and the surface of the embrittlement blocking member 120 that faces the cap member 110 in the form of an annular flow passage, or may be formed in the cap member 110 in an arbitrary groove form at an arbitrary position.

Of course, the external pressure action groove 117 may also be formed in one or both of the surface of the cap member 110 that faces the embrittlement blocking member 120 and the surface of the embrittlement blocking member 120 that faces the cap member 110 in a regular or irregular concave-convex form.

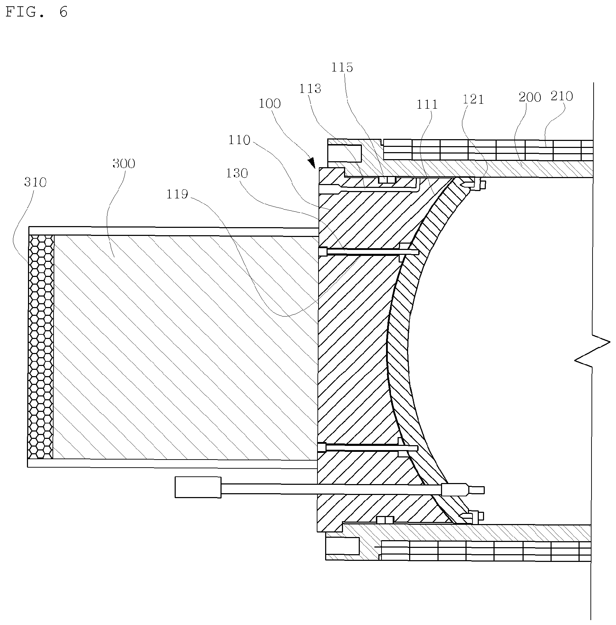

As illustrated in FIG. 6, in the cap member 110 according to a modification, the surface of the insertion portion 111 that faces the inside of the storage cylinder 200 has a curved surface which is concave outwards such that he curved surface is subjected to uniform pressure in an axial direction of the storage cylinder 200.

Here, the embrittlement blocking member 120, which will be described later, may also have a curved surface corresponding to the concave curved surface of the cap member 110 such that the pressure in an axial direction of the storage cylinder 200 is uniformly exerted on the embrittlement blocking member 120.

The embrittlement blocking member 12o may be coupled to the cap member 110 so as to block generation of hydrogen embrittlement in the cap member 110.

The embrittlement blocking member 120 may be installed on the surface of the insertion portion 111 of the cap member 110 which is inserted into the storage cylinder 200 and comes into contact with the hydrogen stored in the storage cylinder 200.

The embrittlement blocking member 120 may be provided between the cap member 110 and the storage cylinder 200 so as to also prevent the pressure in the storage cylinder 200 from being transmitted to the cap member 110.

Here, because atmospheric pressure is exerted between the cap member 110 and the embrittlement blocking member 120 through the penetrated hydrogen discharge hole 113 and relatively high hydrogen pressure is exerted on the inside of the storage cylinder 200, the embrittlement blocking member 120 may perform a function of blocking transmission of hydrogen pressure to the cap member 110.

The embrittlement blocking member 120 may have an inside diameter corresponding to the inside diameter of the storage cylinder 200, and may be coupled to cap member 110 by means of the fastening member 130 such as a bolt.

The embrittlement blocking member 120 may be made of a material having hydrogen embrittlement resistance, or the surface of the embrittlement blocking member 120 may be coated with a material having hydrogen embrittlement resistance.

The embrittlement blocking member 120 may have a thickness T2 equal to or less than the thickness T1 of the cap member 110.

Here, if the thickness of the embrittlement blocking member 120 exceeds 1/3 of the thickness T1 of the cap member 110, hydrogen remains in the storage cylinder 200 without penetrating through the embrittlement blocking member 120, thus increasing the risk of generation of hydrogen embrittlement, and the amount of hydrogen which can be charged in the storage cylinder 200 is reduced because the space of the storage cylinder 200 occupied by the embrittlement blocking member 120 increases.

In contrast, if the thickness T2 of the embrittlement blocking member 120 is equal to or less than 1/3 of the thickness T1 of the cap member 110, hydrogen entering the embrittlement blocking member 120 can penetrate through the embrittlement blocking member 120 without remaining in the embrittlement blocking member 120, and the internal space of the storage cylinder occupied by the embrittlement blocking member 120 is reduced, thereby making it possible to store a relatively large amount of hydrogen.

The embrittlement blocking member 120 may include a blocking member seal 121.

The blocking member seal 121 may be installed at the periphery of the embrittlement blocking member 120 so as to prevent the hydrogen stored in the storage cylinder 200 from being discharged through between the embrittlement blocking member 120 and the storage cylinder 200.

The blocking member seal 121 may be formed to have a ring shape. The blocking member seal 121 may be made of a material having hydrogen embrittlement resistance or may be coated with a material having hydrogen embrittlement resistance. The blocking member seal 121 may be embodied as various known types of high pressure seal capable of enduring high hydrogen pressure.

The blocking member seal 121 may be installed to the periphery of the surface of the embrittlement blocking member 120 which is in contact with the hydrogen so as to prevent discharge of the hydrogen.

Because the embrittlement blocking member 120 is installed to the cap member 110 in an overlapping manner so as to prevent the hydrogen from permeating the cap member 110, it is possible to prevent generation of hydrogen embrittlement in the cap member 110. Furthermore, because the cap member 110 is formed to have only the thickness T1 capable of enduring the internal pressure of the storage cylinder 200 in the axial direction, it is possible to minimize the thickness T1 of the cap member 110 and thus to reduce the manufacturing cost.

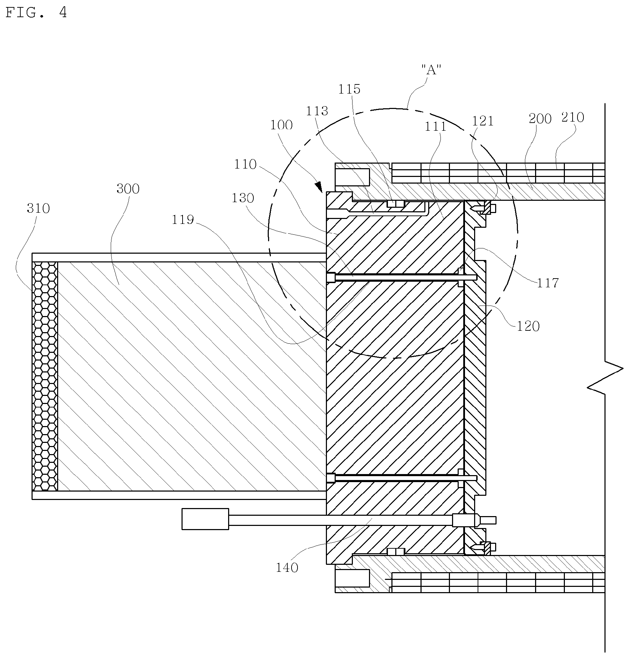

As illustrated in FIGs. 3 and 4, the closure device 100 having improved hydrogen embrittlement resistance for a hydrogen storage container 500 according to an embodiment of the present invention may include a charge nozzle 140.

The charge nozzle 140 is capable of charging hydrogen into the storage cylinder 200.

The charge nozzle 140 may extend through both the cap member 110 and the embrittlement blocking member 120 to allow hydrogen to be supplied and charged into the storage cylinder 200 from the outside of the cap member 110.

The charge nozzle 140 is capable not only of charging hydrogen into the storage cylinder 200 but also of discharging the hydrogen stored in the storage cylinder 200 to the outside therethrough.

Here, if the charge nozzle 140 performs only a function of charging hydrogen into the storage cylinder 200, a discharge nozzle, which extends through both the cap member 110 and the embrittlement blocking member 120 to discharge the hydrogen stored in the storage cylinder 200 to the outside may be additionally provided, in addition to the charge nozzle 140.

When two closure devices 100 are installed to the two opposite ends of the storage cylinder 200, the charge nozzle 140 may be installed to one or both of the two closure devices 100 positioned at the two opposite ends of the storage cylinder 200. Alternatively, the charge nozzle 140 may be installed to one of the two closure devices 100 positioned at the two opposite ends of the storage cylinder 200 and a discharge nozzle may be installed to the other of the two closure devices 100.

Operation and effects of the components described above will now be described.

The closure device 100 having improved hydrogen embrittlement resistance for the hydrogen storage container 500 according to an embodiment of the present invention may be installed to each of the two opposite ends of the storage cylinder 200 so as to hermetically seal the open end of the storage cylinder 200.

The closure device 100 in a state in which the embrittlement blocking member 120 is coupled to the cap member 110 configured to hermetically seal the end of the storage cylinder 200 may be installed to the storage cylinder 200 such that the embrittlement blocking member 120 is positioned in the storage cylinder 200.

The cap member 110 and the embrittlement blocking member 120 may be fastened to each other with a gap interposed therebetween by means of the fastening member 130 so as to allow external pressure to be exerted on the cap member 110 and the embrittlement blocking member 120. The surface of the cap member 110 that faces the embrittlement blocking member 120 may be provided with the external pressure action groove 120 upon which external pressure is exerted through the gap between the embrittlement blocking member 120 and the cap member 110.

The penetrated hydrogen discharge hole 113 may be formed through the cap member 110 so as to communicate with the outside such that external pressure is exerted through the periphery of the insertion portion 111 and the hydrogen having penetrated through the embrittlement blocking member 120 is discharged to the outside.

The cap member seal 115 may be installed to the insertion portion 111 of the cap member 110 so as to prevent discharge of hydrogen through the gap between the storage cylinder 200 and the cap member 110.

A blocking member seal 121 may also be installed to the periphery of the embrittlement blocking member 120 in order to prevent discharge of hydrogen through the gap between the storage cylinder 200 and the embrittlement blocking member 120.

The charge nozzle 140 may be installed to the closure device 100 through the cap member 110 and the embrittlement blocking member 120 so as to charge hydrogen into the inside of the storage cylinder 200.

In the closure device 100 having improved hydrogen embrittlement resistance for a hydrogen storage container 500 according to an embodiment of the present invention, the high pressure hydrogen stored in the storage cylinder 200 may be in contact with the embrittlement blocking member 120, and the blocking member seal 121 and the cap member seal 115 may be respectively installed to the peripheries of the embrittlement blocking member 120 and the cap member 110 so as to block discharge of the hydrogen in the storage container 200 to the outside.

The pressure of the hydrogen stored in the storage cylinder 200 may be exerted on the inner surface of the embrittlement blocking member 120, and atmospheric pressure may be exerted on the external pressure action groove 117 in the cap member 110 through the penetrated hydrogen discharge hole 113 and then the gap between the cap member 110 and the embrittlement blocking member 120.

In the closure device 100 hermetically closing the storage cylinder 200 as described above, when hydrogen permeates the embrittlement blocking member 120, the hydrogen having permeated the embrittlement blocking member 120 may be transmitted to the cap member 110 due to the difference between the internal pressure of the storage container 200 acting on the embrittlement blocking member 120 and the external pressure of the cap member 110.

Here, because the embrittlement blocking member 120 has the thickness T2 less than the thickness T1 of the cap member 110, when the hydrogen permeates the embrittlement blocking member 120, the hydrogen may not remain in the embrittlement blocking member 120 but may penetrate through the embrittlement blocking member 120.

Consequently, due to the pressure difference, the hydrogen having penetrated through the embrittlement blocking member 120 may move through the external pressure action groove 117, on which atmospheric pressure is exerted, and through the gap between the cap member 110 and the embrittlement blocking member 120 and may be discharged to the outside through the penetrated hydrogen discharge hole 113 formed in the periphery of the insertion portion 111, thereby preventing generation of hydrogen embrittlement caused by permeation of hydrogen into the cap member 110.

Accordingly, the closure device 100 having improved hydrogen embrittlement resistance for the hydrogen storage container 500 according to an embodiment of the present invention is able not only to prevent generation of hydrogen embrittlement caused by permeation of the hydrogen into the cap member 110 by installing the embrittlement blocking member 120 to the cap member 110 but also to prevent generation of hydrogen embrittlement caused by permeation of the hydrogen into the cap member 110 by discharging the hydrogen, having penetrated through the embrittlement blocking member 120, to the outside through the penetrated hydrogen discharge hole 113 in the cap member 110 on which atmospheric pressure is exerted.

Furthermore, because the embrittlement blocking member 120 can prevent hydrogen embrittlement and thus there is no need to make the cap member 110 using a material having hydrogen embrittlement resistance, it is possible to manufacture the cap member 110 selectively using one of various materials and to reduce the manufacturing const.

In addition, because the cap member 110 has a minimized thickness T1 capable of enduring the pressure of the storage container 200 in the axial direction, it is possible to minimize the volume of the cap member 110 and to reduce the manufacturing cost. Furthermore, because the cap member 110 is made of a material capable of satisfying a desired mechanical strength, it is possible to improve durability of the closure device.

Hereinafter, the hydrogen storage container 500 including the closure device 100 having improved hydrogen embrittlement resistance according to an embodiment of the present invention will be described.

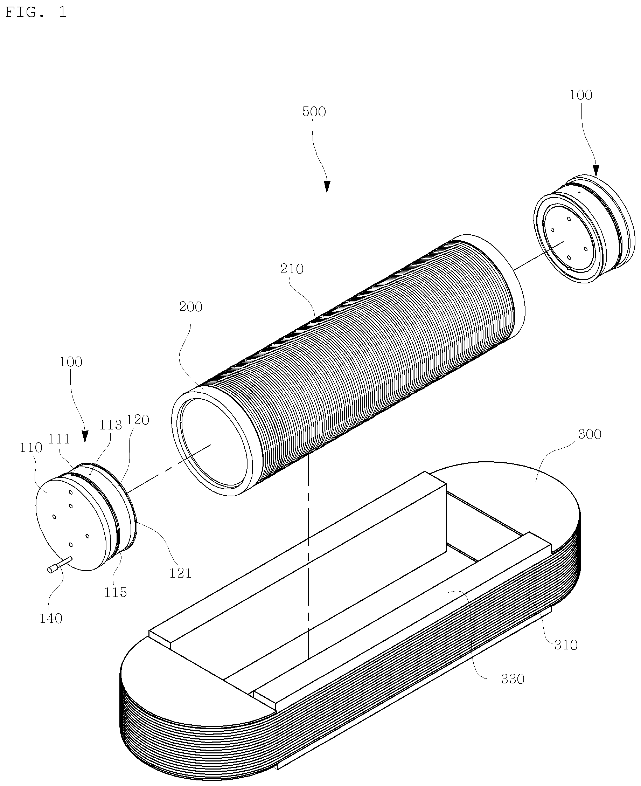

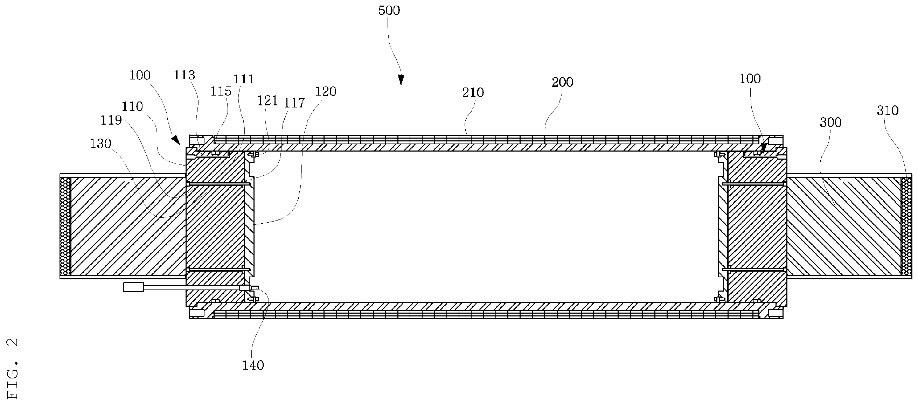

As illustrated in FIGs. 1 and 2, the hydrogen storage container 500 according to an embodiment of the present invention may include the closure device 100.

Because the closure device 100 is the closure device 100 according to the embodiment which has been described above, the detailed description of the closure device 100 is omitted.

The hydrogen storage container 500 according to an embodiment of the present invention may include the storage cylinder 200, yokes 300, a cylinder wire 210, and a yoke wire 310.

The storage cylinder 200 may store hydrogen therein.

The storage cylinder 200 may be formed to have the form of a hollow cylinder, and two opposite ends of the storage cylinder 200 may be open.

The two opposite ends of the storage cylinder 200 may be hermetically sealed by means of the closure devices 100.

The cylinder wire 210 may endure the internal pressure of the storage cylinder 200 in a radial direction. The cylinder wire 210 may be wound around the outer surface of the storage cylinder 200.

The cylinder wire 210 may be made of a metal wire. The cylinder wire 210 may be formed to have a strip form, and may be wound around the outer surface of the storage cylinder to form a plurality of wire layers.

The yokes 300 may be installed on the outer surfaces of the cap members 110 of the closure devices 100 constituting the closure device 100 in order to prevent separation of the closure devices 100 from the storage cylinder 200 caused by the internal pressure in the axial direction of the storage cylinder 200.

Each of the yokes 300 may have a semicircular form. Each of the yokes 300 may be installed on a corresponding one of the cap members 110 such that the flat end of the yoke 300 faces the cap member 110 of the closure device 100.

The yokes 300 may be respectively installed on the cap members 110 of the closure device 100, which are positioned at two opposite sides of the closure device 100. The yoke wire 310 may be wound around the yokes 300.

The yoke wire 310 may endure the internal pressure of the storage cylinder 200 in the axial direction.

The yoke wire 310 may be a metal wire, and may be formed to have a strip form.

The yoke wire 310 may be wound around the periphery of the storage cylinder 200 and the yokes 300 positioned at the two opposite sides of the storage cylinder 200. The yoke wire 310 may be wound to form a plurality of wire layers.

The yokes 300, which are positioned at the two opposite sides of the storage cylinder 200, may be supported by columns 330.

In the hydrogen storage container 500 including the closure device 100 according to an embodiment of the present invention, which is constructed as described above, the cylinder wire 210 may be wound around the outer surface of the storage cylinder 200 in order to endure the internal pressure in a radial direction, and the cap member may be installed on the two opposite ends of the storage cylinder 200 such that the embrittlement blocking member 120 of the closure device 100 is positioned in the storage cylinder 200 and is in contact with the hydrogen stored in the storage cylinder 200.

In the state in which the closure device 100 is installed on the storage cylinder 200 to hermetically seal the storage cylinder 200, the yokes 300 may be respectively installed on the cap members 110 positioned at the two opposite sides of the storage cylinder 200 such that the flat surfaces of the yokes 300 are respectively seated on the cap members 110.

Furthermore, the yoke wire 310 may be wound around the two yokes 300 positioned at the two opposite sides of the storage cylinder 200 and the periphery of the storage cylinder 200 in order to endure the internal pressure in the axial direction of the storage cylinder 200.

In the hydrogen storage container 500 including the closure device 100 according to an embodiment of the present invention, which is constructed as described above, in addition to the effects obtained by the closure device 100 of the hydrogen storage container 500 according to an embodiment of the present invention, because the cylinder wire 210 is wound around the storage cylinder 200 in order to endure the internal pressure of the storage cylinder 200 in a radial direction, it is possible to improve the durability of the storage cylinder 20 and to prevent explosion of the storage cylinder 200. Furthermore, by virtue of the yoke wire 310, it is possible to endure the internal pressure in the axial direction of the storage cylinder 200 and thus to improve the durability.

In addition, because the closure devices 100 are installed on the two opposite sides of the storage cylinder 200, it is possible to prevent generation of hydrogen embrittlement in the cap member 110.

Although the embodiment of the invention has been described, the scope of the present invention is not limited thereto and may include any and all modifications and variations which are easily changed from the embodiment of the present invention by those skilled in the art to which the present invention belongs and which are considered to be equivalents by those skilled in the part.

### [DESCRIPTION OF REFERENCE NUMERALS]

| | | | |
|---|---|---|---|
| 100: | Closure device | 110: | Cap member |
| 111:11 | Insertion portion hydrogen discharge hole | 113: | Penetrated |
| 115: | Cap member seal | 117: | External pressure action groove |
| 119: | Fastening hole | 120: | Embrittlement blocking member |
| 121: | Blocking member seal | 130: | Fastening member |
| 140: | Charge nozzle | 200: | Storage cylinder |
| 210: | Cylinder wire | 300: | Yoke |
| 310: | Yoke wire | 330: | Column |
| 500: | Hydrogen storage container | | |
| | | | |

## Claims

1. A closure device having improved hydrogen embrittlement resistance for a hydrogen storage container, the closure device being configured to hermetically seal a storage cylinder storing hydrogen therein, and the closure device comprising:
a cap member configured to hermetically seal an open end of the storage cylinder and to endure pressure of the hydrogen charged in the storage cylinder;
an embrittlement blocking member installed on the cap member so as to be in direct contact with the hydrogen charged in the storage cylinder and to block permeation of the hydrogen into the cap member caused by an internal pressure of the storage cylinder; and
a penetrated hydrogen discharge hole which is formed through the cap member to communicate with an outside and to allow an external pressure lower than an internal pressure of the storage cylinder to be exerted between the embrittlement member and the cap member and through which the hydrogen having penetrated through the embrittlement blocking member is discharged.

2. The closure device according to claim 1, wherein an external pressure action groove is formed between the cap member and the embrittlement blocking member such that the external pressure is exerted on the external pressure action groove through the penetrated hydrogen discharge hole.

3. The closure device according to claim 1, wherein the external pressure action groove is formed in the cap member or the embrittlement blocking member in an irregular concave-convex form.

4. The closure device according to claim 1, wherein the embrittlement blocking member is made of a material having hydrogen embrittlement resistance or is coated with a material having hydrogen embrittlement resistance, and
wherein the cap member is made of a material having no hydrogen embrittlement resistance.

5. The closure device according to claim 1, wherein the embrittlement blocking member has a thickness equal to or less than 1/3 of a thickness of the cap member.

6. The closure device according to claim 1, wherein the embrittlement blocking member comprises a blocking member seat installed on a periphery of the embrittlement blocking member to prevent discharge of the hydrogen through between the storage cylinder and the embrittlement blocking member.

7. The closure device according to claim 1, wherein the cap member comprises a cap member seal hermetically disposed between the cap member and the storage cylinder to prevent discharge of the hydrogen.

8. The closure device according to claim 1, comprising a charge nozzle installed through the cap member and the embrittlement blocking member to charge hydrogen into the storage cylinder.

9. A hydrogen storage container comprising the closure device according to claim 1 having improved hydrogen embrittlement resistance for a hydrogen storage container, the hydrogen storage container comprising:
the closure device; and
a cylinder wire wound around an outer surface of the storage cylinder to reinforce the storage cylinder.

10. The hydrogen storage container according to claim 9, wherein the storage cylinder is open at two opposite sides, and
wherein the closure device is installed on each of the two open sides of the storage cylinder.

11. The hydrogen storage container according to claim 10, comprising:
yokes respectively installed on outer sides of the cap members positioned at two opposite sides of the storage cylinder to prevent separation of the cap members from the storage cylinder; and
a yoke wire wound around the yokes positioned at the two opposite sides of the storage cylinder with the storage cylinder interposed therebetween to endure pressure in an axial direction of the storage cylinder.
